# EUROPEAN PATENT SPECIFICATION

(11) **EP 2 256 154 B1**
(45) Date of publication and mention of the grant of the patent: **04.10.2017**
(21) Application number: 09155371.9
(22) Date of filing: 17.03.2009
(51) Int. Cl.: C08J 9/00, C08J 9/236, E04B 1/76

(54) **Method of insulation**
Isolierverfahren
Procédé d'isolation

(43) Date of publication of application: 01.12.2010
(73) Proprietor: SYNTHOS STYRENICS SYNTHOS DWORY 2 SPOLKA Z OGRANICZONA ODPOWIEDZIALNOSCIA SP. K., 32-600 Oswiecim (PL)
(72) Inventor: Rauniyar, Govind, 4706 HP Roosendaal (NL)
(74) Representative: Smith, Julian Philip Howard

(56) References cited:
- EP-A- 1 997 849
- DE-A1- 19 845 891
- DE-A1-102005 031 133
- GB-A- 2 101 644
- US-B1- 6 465 533

## Description

This invention relates to a method of insulation. In particular it relates to a loose-fill cavity wall system providing well-bonded beads of expanded polystyrene with low thermal conductivity and improved fire resistance.

Polystyrene foams have for a long time now been used in the insulation of buildings. Usually, this takes the form of moulded or cut foam panels placed in between the inner walls of a building and construction, on the facade, on roofs, etc. In recent years, an increased use has arisen for the renovation of buildings with better insulation properties. For this, expanded polystyrene beads are extremely useful in a technique called loose-fill cavity wall insulation. This technique consists in injecting into hollow cavity walls a mix of expanded beads having a bulk density of around 10-15 kg/m3 together with a bonding agent. This simple technique not only facilitates the insulating of old builds but also new constructions. The hollow cavities (> 60 mm) can be retrofitted with expanded beads, thereby improving the energy efficiency of old and new dwellings.

For polystyrene foams, we have recently developed composite materials rendering the moulded foams fire resistant as described in our patent application WO 2008/145599. However, for loose-fill cavity applications, there remains a need for a low thermal conductivity and fire resistant insulation system combining benefits of expanded polystyrene beads with an excellent fire retardant bonding agent or system.

Normally, the polystyrene grade used in this application is a standard white grade (fire retardant or not) and has a thermal conductivity of + 40 mW/m.K and a bulk density of 15 kg/m3. However the bonded foams do not pass even the small-scale DIN 4102 B2 fire test let alone the stringent DIN 4102 B1 test normally required for the fused EPS boards. The polystyrene grade that contains athermanous materials can also be used for this application and these give enhanced thermal properties

A binder has now been found for this application which provides excellent binding properties together with enhanced fire retardancy while retaining the thermal properties associated with polystyrene comprising athermanous materials in particular carbon black.

Polystyrene is intrinsically a combustible material. Specific fire retardant additives are incorporated into the polymer or a combination of polystyrene parts with other constructive materials is used to achieve good fire retardancy. In these product types and combinations, polystyrene foams have earned a reputation as safe and very efficient construction/insulation materials.

Although a heat-insulating layer is produced in cavities of masonry or hollow building blocks by introducing moulded foam panels of expanded plastics and a binder, there has been recently a growing use of expanded polystyrene beads as filler for cavity-wall insulation. The binder ensures that the expanded beads hold together in place, thus providing the necessary structural integrity by avoiding easy disintegration of expanded beads at low levels of strain. The binder also helps to reduce the spillage of beads in case of structural (wall) damage. At present, the binders used are normally aqueous dispersions of organic polymers of acrylics, vinyl acetates, polyurethanes and so forth. European Patent EP 1997849 discloses a composition comprising expanded or expandable polystyrene beads, an intumescent like expandable graphite and a fire-resistant binder. UK Patent GB 2101644 A discloses a process of insulating cavities using a low-flammability mix of expanded plastics and an aqueous binder comprising precipitated silica, sodium silicate powder , slaked lime and a surfactant. The heat insulating layer produced had a density of 50 kg/m3 and a heat conductivity of 0.045 W/m.K. However there was no indication that such binders would be particularly suited for use with polystyrene containing athermanous material. In addition the amount of binder used in relation to the weight of the expanded plastic is relatively high e.g. > 50%.

The aforementioned cases of coating provide some fire resistance but not sufficient enough to allow the structural integrity of the loose-fill wall (thus the masonry) to be maintained in case of a fire. In masonry filling, using the organic binder the expanded beads are bonded but not fused together as is the case of a moulded foam. Thus the bonded expanded beads will have interspaces (air channels) in between them and hence behave completely different vs. fused EPS boards when subjected to fire. We have now found that compared to organic binders, inorganic binders work better with expanded polystyrene beads containing athermanous material (e.g. EPS Silver, Neopor, and Lambdapor polymers; Silver, Neopor and Lambdapor are all trade names of INEOS Nova, BASF and Sunpor respectively).

It is an object of the present invention to provide polyvinylarene polymer compositions particularly those containing athermanous material together with an inorganic binder that can be used in cavities of masonry or hollow building blocks. The fire behaviour of this system (inorganic binder and expanded polystyrene beads containing athermanous material) can be further improved by adding small amounts of fire-resistant enhancer for example expandable graphite to this system.

The present invention provides a method of insulation comprising introducing into an enclosed cavity expanded polystyrene beads or particles comprising athermanous material together with a inorganic binder.

A typical polymer composition for use in the present invention comprises (i) expanded polystyrene particles or beads, preferably beads, (ii) an inorganic binder preferably water glass and (iii) an athermanous material preferably carbon black.

The inorganic binder is preferably used as a liquid or a paste capable of
(i) helping the expanded beads to adhere together with a good bonding strength
(ii) carrying the fire-resistant enhancer when used and distributing it homogeneously over the expanded beads during the filling of a cavity or masonry structure and
(iii) producing a residue of non-combustible material upon heating by fire.

The inorganic binder can be for example a metal silicate or metal aluminosilicate or a zeolite. Preferred are binders based on silicate and water, where silicate is understood to be any of numerous compounds containing silicon, oxygen, and one or more metals. Generally, silicates consist of SiO₂ or SiO₄ groupings combined with one or more metals and sometimes hydrogen, with the addition of ions such as aluminium, magnesium, calcium, sodium, or other metals. According to the combination ratio Na₂O/SiO₂, they can be divided into various products. For example, liquid sodium silicate, called water glass, is a viscous alkaline and transparent solution in which the SiO₂ Na₂O ratio varies. Also well known are the zeolites, hydrated aluminium silicates of calcium sodium or potassium. When based on calcium as additional salt source, binders can even be cement, lime or gypsum. Particularly preferred are alkali metal silicates for example sodium or potassium silicate preferably sodium silicate.

The inorganic binder can also be in the form of a gel or a sol-gel particularly when the binder is a silicate or zeolite. A gel is a colloidal suspension in which a porous skeleton encloses a liquid phase. The fire-resistant binder may be applied as a gel-forming composition comprising a silicate or aluminosilicate which may optionally also comprise an organic liquid in particular an organic liquid that is water-immiscible. The gel-forming composition can be formed *in situ* by adding a metal silicate with a metal aluminate preferably in water. The amount of silicate in a binder comprising silicate and a carrier for example water will be in the range of 10-70, preferably 25-60 for example 30-45 per cent by weight based on the total weight of the silicate plus carrier.

The ratio of the weight of inorganic binder to weight of polystyrene in the compositions used in the present invention is in the range 5:95 to 50:50, preferably 10:90 to 40:60 for example 25:75. where the term binder is used it is understood to mean the inorganic material for example silicate together with its carrier usually water and weights and relative weights of binder are to be construed in the same manner.

The above-noted fire-resistant enhancer is an additive which upon exposure to heat or fire, provides a foamed charred layer protecting the polymer from the heat. Examples include ammonium polyphosphate/pentaerythritols, melamine, dicyandiamide, guanidines, phosphonates, chloroparaffins, phosphines, vermiculites, perlites, and expandable graphite, preferably expandable graphite.

The expanded polystyrene beads are formed typically by heat treatment of expandable polystyrene (e.g. as described in "Modern Styrenics Polymers, Scheirs & Priddy, eds. Wiley, New York 2003). Expandable polystyrene is understood to be a composition which comprises a blowing agent and which is capable of expansion by virtue of the presence of the blowing agent. The composition may be in the form of particles or, preferably, of expandable beads. By beads are meant, generally, spherical or substantially spherical particles, in particular spheroidal particles which may have a large diameter and a small diameter, with a ratio between the large diameter and the small diameter ranging in particular from 1.0 to 1.3, preferably from 1.0 to 1.2. The expandable particles or beads may have an average size ranging from 0.3 to 3 mm, preferably from 0.3 to 2 mm, in particular from 0.4 to 1.5 mm. They may also have a bulk density (or apparent density), measured according to method ASTM D 1622, ranging from 550 to 720 kg/m³, preferably from 580 to 710 kg/m³, in particular from 600 to 770 kg/m³.

The expandable polystyrene composition comprises a styrene polymer, which may be a homopolymer or a copolymer of styrene, containing at least 50%, preferably at least 80% and in particular at least 90% by weight of styrene. The comonomer or comonomers present in the styrene copolymer may be selected from vinylaromatic compounds, in particular from alpha-methylstyrene, a styrene halogenated on the aromatic ring or a styrene alkylated on the aromatic ring, (meth)acrylic acid, C₁ to C₄ alkyl esters of (meth)acrylic acid such a methyl acrylate, methyl methacrylate, ethyl acrylate, ethyl methacrylate, isopropyl acrylate or butyl acrylate, amides and nitriles of (meth)acrylic acid such as acrylamide, methacrylamide, acrylonitrile or methacrylonitrile, butadiene, ethylene, divinylbenzene and maleic anhydride. The expandable polystyrene composition can also be a blend of polystyrene and polyolefins polymers (e.g. ARCEL commercially available from NOVA Chemicals). Preference is given to using a homopolystyrene. The weight-average molecular mass, Mw, of the styrene polymer may be in a range extending from 150 000 to 450 000 daltons, preferably from 160 000 to 400 000 daltons, in particular from 170 000 to 300 000 daltons. The distribution of the molecular masses of the styrene polymer, calculated by the ratio between Mw and the number-average molecular mass Mn of the polymer, may range from 1.5 to 4.0, preferably from 1.7 to 3.5, in particular from 1.8 to 3.0. The polystyrene may advantageously have a relatively low level of residual monomer and, where appropriate, of residual comonomer(s), despite the presence of the carbon black, which is known to be a polymerization inhibitor: for example, the amount may be less than or equal to 2000 parts by weight per million (ppm), preferably equal to or less than 1000 ppm.

The expandable polystyrene composition comprises, per 100 parts by weight of styrene polymer, from 2 to 20 parts, preferably from 3 to 15 parts and in particular from 3 to 10 parts by weight of at least one blowing agent. The blowing agent may be selected from aliphatic or cyclic, optionally fluorinated, hydrocarbons, carbon dioxide, water and mixtures of two or more of these compounds. More particularly it may be selected from Freons, linear or branched saturated hydrocarbons and cyclic saturated hydrocarbons, preferably C₃ to C₇ hydrocarbons, in particular C₄ to C₆ hydrocarbons, such as n-butane, isobutane, n-pentane, isopentane, n-hexane or isohexane, carbon dioxide, water and mixtures of two or more of these compounds, especially mixtures of two or more of these hydrocarbons, mixtures of carbon dioxide with water, mixtures of carbon dioxide with at least one of these hydrocarbons, or mixtures of water with at least one of these hydrocarbons and, optionally, carbon dioxide.

The expandable polystyrene composition may further comprise at least one additive selected from fire retardants, nucleating agents, plasticizers and agents which facilitate the demoulding of the moulded and expanded articles. In particular it may comprise at least one fire retardant selected in particular from halogenated hydrocarbons, preferably brominated hydrocarbons, in particular C₆ to C₁₂ hydrocarbons, such as hexabromocyclohexane, pentabromomonochlorocyclohexane or hexabromocyclododecane, in an amount which can range from 0.05 to 2 parts, preferably from 0.1 to 1.5 parts, by weight, per 100 parts by weight of the styrene polymer. The composition may further comprise at least one nucleating agent selected in particular from synthetic waxes, in particular Fischer-Tropsch waxes and polyolefin waxes such as polyethylene waxes or polypropylene waxes, in an amount which can range from 0.05 to 1 part, preferably from 0.1 to 0.5 part, by weight per 100 parts by weight of the styrene polymer. The composition may likewise comprise at least one plasticizer, selected in particular from mineral oils and petroleum waxes such as paraffin waxes, in an amount that can range from 0.1 to 1 part, preferably from 0.1 to 0.8 part, by weight per 100 parts by weight of the styrene polymer. The composition may additionally comprise at least one agent which facilitates the demoulding of the moulded and expanded articles, selected in particular from inorganic salts and esters of stearic acid, such as glycerol mono-, di- or tristearates and zinc stearate, calcium stearate or magnesium stearate, in an amount which can range from 0.05 to 1 part, preferably from 0.1 to 0.6 part, by weight per 100 parts by weight of the styrene polymer.

The process for preparing the expandable polystyrene composition which is in the form of, in particular, expandable particles or, preferably, expandable beads preferably comprises a step of polymerizing styrene and optionally at least one comonomer as mentioned above in aqueous suspension, followed by a step of separating off and eliminating the aqueous phase, and isolating the composition in particular in the form of expandable particles or beads. The polymerization in aqueous suspension may be carried out with stirring, in the presence of at least one free-radical polymerization initiator, at least one suspension stabilizer, blowing agent or agents, the blowing agent(s) being present in an amount which can range from 3 to 20, preferably 5-10 by weight parts by weight per 100 parts by weight of styrene. Alternatively the expandable particles or beads can be prepared by impregnating the polystyrene polymer with blowing agent e.g. pentane in the melt phase i.e. melt extrusion.

Polymerization in aqueous suspension may be carried out at a temperature ranging from 70 to 150°C, preferably from 85 to 140°C. It may be carried out with a weight ratio between the water and the styrene and optionally the comonomer(s) ranging from 0.8/1 to 5/1, preferably from 0.9/1 to 4/1. The polymerization may be continued for a time such that the amount of residual monomer and, where appropriate, of residual comonomer(s) is less than or equal to 2000 ppm, preferably less than or equal to 1000 ppm.

Polymerization in aqueous suspension is preferably carried out in the presence of the athermanous material e.g. carbon black in an amount in the range of 1 to 20 preferably 2 to 10 for example 5 to 7 parts by weight per 100 parts by weight of styrene Polymerization in aqueous suspension is carried out in the presence of one or more free-radical polymerization initiators, in an amount which can range from 0.01 to 2 parts, preferably from 0.05 to 1 part by weight, per 100 parts by weight of monomer and optionally of comonomer(s). The free-radical polymerization initiator may be selected from mono-, di- and polyfunctional free-radical initiators, and in particular from peroxides, hydroperoxides, peroxycarbonates, perketals, peresters and azo compounds. It is preferably selected from difunctional or polyfunctional free-radical initiators and more particularly from peresters. It has been found particularly advantageous to carry out the polymerization in the presence of at least one free-radical polymerization initiator selected from cumylhydroperoxide, peresters, such as tert-butyl peroxy-2-ethylhexanoate, tert-butyl peroxyneodecanoate, tert-butyl peroxypivalate, tert-butyl peroxydiethylacetate, tert-butyl peroxyisobutyrate, tert-butyl peroxy-3,5,5-trimethylhexanoate, cumyl peroxyneodecanoate, tert-amyl peroxy-2-ethylhexanoate, tert-amyl peroxyneodecanoate, tert-amyl peroxypivalate, 2,5-bis(2-ethylhexanoylperoxy)-2,5-dimethylhexane or 2,4,4-trimethylpentyl-2-peroxyneodecanoate, or else from difunctional or polyfunctional free-radical initiators, such as 1,1-bis(tert-butylperoxy)-3,3,5-trimethylcyclohexane, 1,1-bis(tert-butylperoxy)cyclohexane, 2,5-bis(tert-butylperoxy)2,5-dimethylhexane, 2,2-bis(tert-butylperoxy)butane or bis(tert-butylperoxyisopropyl)benzene. In effect, these initiators make it possible to improve the yield of the polymerization reaction in spite of the presence of the carbon black. It is possible, accordingly, to manufacture the polystyrene containing a very low amount of residual styrene and, where appropriate, of residual comonomer(s). The free-radical polymerization initiator or initiators may be introduced in its or their entirety at the beginning of polymerization or else part at the beginning and the remaining part in one or more portions during the polymerization.

Polymerization in aqueous suspension is preferably carried out in the presence of at least one suspension stabilizer, in particular at least one organic suspension stabilizer, selected in particular from polyvinyl alcohols, hydroxyethylcellulose, methylcellulose, sodium dodecylbenzenesulphonate, random copolymer of acrylic acid and ethylhexylacrylate starch, polyacrylamides and polyvinylpyrrolidones, or at least one inorganic suspension stabilizer, selected in particular from alumina, magnesium silicate, magnesium oxide, zinc oxide, calcium carbonate, calcium fluoride and inorganic salts of (pyro)phosphoric acid such as tricalcium phosphate, barium phosphate, aluminium phosphate or magnesium pyrophosphate. The amount of suspension stabilizer employed may be from 0.05 to 6 parts, preferably from 0.1 to 4 parts, by weight per 100 parts by weight of styrene and optionally of comonomer(s).

In order to improve the stability of the suspension it is also possible to carry out the polymerization in the presence of a styrene (pre)polymer different from or, preferably, identical to the polymer of the composition, in an amount which can range from 1 to 50 parts, preferably from 30 to 45 parts, by weight per 100 parts by weight of total employed. Thus it is possible, before beginning the polymerization, to form a solution, by addition and dissolution of the (pre)polymer of styrene in the monomer or, where appropriate, the comonomer(s). Thus it is possible to carry out prepolymerization in bulk or in a solution of styrene and, where appropriate, of one or more comonomers, until the abovementioned proportion of (pre)polymer is attained, and then to continue the polymerization in aqueous suspension in the presence in particular of the aforementioned reactants and additives.

Polymerization in aqueous suspension may be carried out in the presence of other additives, selected from chain transfer agents such as mercaptans and the dimers of alpha-methylstyrene, fire retardants such as halogenated hydrocarbons, preferably brominated hydrocarbons, in particular those mentioned above, crosslinking agents such as butadiene or divinylbenzene, plasticizers and nucleating agents, especially those mentioned above.Polymerization in aqueous suspension is carried out in particular in the presence of at least one blowing agent, in an amount ranging from 3 to 23 parts, preferably from 4 to 17 parts, in particular from 4 to 12 parts by weight, per 100 parts by weight of styrene and optionally of comonomer(s) employed in the polymerization. Generally, a small portion of the blowing agent employed during the polymerization is lost and is not recovered in the expandable polystyrene composition after the polymerization. The blowing agent or agents may be selected from those mentioned above and may be introduced in their entirety at the beginning or during the polymerization, or else partly at the beginning and the remaining part in one or more portions during the polymerization. They may alternatively be introduced in a separate impregnation step.

The expandable polystyrene composition is used for producing expanded beads, having in particular a bulk density (or apparent density), measured according to method ASTM D 1622, ranging from 5 to 200 kg/m³, preferably from 5 to 180 kg/m³ and in particular from 5 to 20 kg/m³. The expanded polystyrene is typically produced by a process comprising the following steps:
(i) a step of pre-expansion (or prefoaming) by contacting and mixing the composition, in particular in the form of expandable particles or expandable beads, with steam, in particular in a stirred tank and in particular under pressure and temperature conditions capable of forming expanded particles or beads having in particular a bulk density (or apparent density) ranging from 5 to 200 kg/m³, preferably from 5 to 100 kg/m³ and in particular from 5 to 50 or to 20 kg/m³, for example at a temperature ranging from 80 to 110°C, or from 85 to 105°C, and under an absolute pressure which can range from 10 to 160 kPa, or from 50 to 150 kPa, and
(ii) optionally, a step of stabilising the particles or beads (maturation) thus expanded, by contacting them with ambient air, in particular at a temperature ranging from 0 to 40°C, and under an absolute pressure which can range from 50 to 130 kPa, preferably from 80 to 120 kPa, for a time which can range from a few hours to a few days, for example from4 hours to 3 days, such as in particular to attain an equilibrium between the ambient air and the internal atmosphere of the expanded particles or beads.

The amount of polystyrene in the composition comprises 1 to 99, preferably 10 to 80 more preferably 50to 75 by weight of the composition of polystyrene, athermanous material and binder set out herein above.

The athermanous material e.g. carbon black may be added to the polystyrene during or after the polymerisation stage, preferably during. It is preferred that polystyrene particles are prepared. Alternatively the athermanous material may be added to polystyrene in the melt phase e.g. by melt extrusion.

Athermanous material is material that does not transmit or exhibits limited transmission of heat. Typical athermanous materials include metal oxides e.g. Fe₂O₃, Al₂O₃, non-metallic oxides e.g. SiO2, metal powder, organic dyes, IR radiation absorbers and carbon in particular in the form of carbon black or graphite, preferably carbon black.

The carbon black can be any of various finely divided forms of carbon derived from incomplete combustion of natural gas, petroleum oil or other organic product and may be selected from electrically conductive carbon blacks, and more specifically from carbon blacks having in particular a very high pore volume, as measured by dibutyl phthalate absorption (DBPA) according to method ASTM D 2414, having for example a value of more than 300 ml/100 g, in particular ranging from 310 to 600 ml/100 g, preferably from 310 to 550 ml/100 g, or else having a very high iodine adsorption number, measured according to method ASTM D 1510, having for example a value of more than 500 g/kg, preferably more than 600 g/kg, or ranging from 700 to 1300 g/kg, in particular from 740 to 1150 g/kg. The carbon black may be in the form of solid aggregates with in particular a relatively low size, measured according to method ASTM D 3849, having for example a value ranging from 10 to 100 nm, preferably from 10 to 50 nm, in particular from 10 to 30 nm. By way of example it is possible to use a carbon black from among the electrically conductive carbon blacks sold under the trade names Ketjenblack EC300J^{®} and Ketjenblack EC600JD^{®} by Akzo Nobel (Netherlands).

The expanded polystyrene beads are injected into the cavity together with the inorganic binder and with the fire-resistant enhancer, if any; it is important to achieve good distribution of both over the expanded bead surface. The inorganic binder and the fire-resistant enhancer can be also mixed prior to being injected. The mixing process can be carried out at a temperature in the range 0°-100°C preferably, 0° - 75°C, more preferably, most preferably at ambient temperature.

The polystyrene particles or beads can be any colour or mixture of colours. In particular the polystyrene can comprise white particles or beads and coloured particles or beads for example 50% white particles or beads and 50% black particles or beads. Alternatively the polystyrene can comprise particles or beads of different colours for example 50% blue particles or beads and 50% black particles or beads. Where the particles comprise carbon black or graphite as the athermanous material the particles will be grey or black in colour. Where the athermanous material is alumina or silica the polystyrene particles or beads will be white.

Accordingly the invention relates to the use of the expanded particles and expanded beads produced for a cavity wall filling having a bulk density (or apparent density) for example ranging from 5 to 200 kg/m³, preferably from 5 to 100 kg/m³, in particular from 5 to 50 kg/m³, and especially from 5 to 20 kg/m³.

The invention will now be illustrated with reference to the following examples: Expandable polystyrene polymer particles were prepared by conventional suspension polymerisation.

### Experimental

The expandable beads were first expanded to a bulk (apparent) density of 10-30 kg/m3 using a batch expander (0.2 barg) and matured overnight. Matured expanded beads of standard PS (FR and non FR) and Silver (FR) grades were mixed in a carton-box with varying amount of water glass (WG) (34%wt solids, viscosity: 100 cP/20 °C) and expandable graphite if desired. After two minutes mixing, the green strength was checked by pressing the expanded beads between the two hands and releasing them. The bonding quality was judged good if the heap of the pressed expanded beads stood right in the box without falling. The coated beads were then poured into an EPS frame of 300*300*50 mm and allowed to dry at RT for 3 weeks in order to remove the water from the binder. They were then conditioned for 24 hours at 23 °C / 50% RH prior to measuring the density, lambda and fire behaviour using the DIN 4102 B2 test set-up using only one sample per test. For the sake of comparison, a standard organic binder (acrylic based: 34%wt solids) was also used in combination with Silver expanded beads.

### Example 1

54 g of non-FR EPS beads (13.2 kg/m3) were mixed with 21.6g of water glass. The green strength of the expanded beads was good. The expanded beads were well bonded but failed the B2 test as expected.

### Example 2

The expanded bead in example 1 was replaced by a FR EPS grade. The bonding quality of the beads was comparable to that in Example 1. However, the product failed the DIN 4102 B2 test in spite of the fact that this grade is used to produce foam boards that pass the DIN 4102 B1 and B2 fire tests.

### Example 3

60 g of Silver expanded beads (14.4 kg/m3) were mixed with 24 g of waterglass solution (34% wt solids). A very good bead to bead adhesion was obtained. The product did not burn. Limited burning droplets were observed.

### Example 4

The water glass binder in example 3 was replaced by 24 g of an organic acrylic binder (34%wt solids). The bonded foam burnt completely.

### Example 5

60 g of Silver expanded beads (14.4 kg/m3) were mixed with 24 g of waterglass solution and 8 gms of expandable graphite. A very good bead to bead adhesion was obtained. It did not burn and no burning droplets were observed.

| Example | EPS grade | Expanded | %wt composition | | |
|---|---|---|---|---|---|
| | | Kg/m3 | EPS | Sodium silicate aqueous solution | Organic binder |
| 1 | White (nonFR) | 13.2 | 71.4 | 28.6 | 0 |
| 2 | White FR | 13.2 | 71.4 | 28.3 | 0 |
| 3 | Silver | 14.4 | 71.4 | 28.6 | 0 |
| 4 | Silver | 14.4 | 71.4 | | 28.6 |
| 5* | S400R * | 14.6 | 65.2 | 26.1 | 0 |

| | | | | | |
|---|---|---|---|---|---|
| * : expandable graphite : 8.7%wt in the compostion | | | | | |

**Table 1: Composition of loose-fill cavity tested**

| **Example** | **EPS grades** | **Burning test** | **Observations Foam Burning** | **Burning droplets** | **Burnt height, mm** |
|---|---|---|---|---|---|
| 1 | Standard (non-FR) | Fail | Yes | yes | > 150 |
| 2 | FR | Fail | Yes | yes | > 150 |
| 3 | Silver | Pass | No | A few | < 80 mm |
| 4 | Silver | Fail | Yes | Yes | >150 |
| 5 | Silver | Pass | No | No | < 80 mm |

**Table 2: Fire test performance**

| **Example** | **EPS grades** | **Lambda values, mW**/**m**.**K (10 °c)** |
|---|---|---|
| 1 | White non-FR | 38 |
| 2 | White FR | 38.5 |
| 3 | Silver | 33.4 |
| 4 | Silver | 33.7 |
| 5 | Silver | 33.4 |

Thermal conductivity of the bonded foams

## Claims

1. A method of loose-fill cavity wall insulation comprising introducing into an enclosed cavity expanded polystyrene beads or particles comprising athermanous material together with a fire retardant in an amount of from 0.05 to 2 parts by weight per 100 parts by weight of the styrene polymer and an inorganic binder.

2. A method as claimed in claim 1 wherein the athermanous material is carbon black.

3. A method as claimed in either claim 1 or claim 2 wherein the inorganic binder is a metal silicate.

4. A method as claimed in any one of the preceding claims wherein a fire-resistant enhancer is introduced with the inorganic binder.

5. A method as claimed in claim 4 wherein the fire-resistant enhancer is expandable graphite.

## Patentansprüche

1. Verfahren zur Schütt-Kernisolierung, umfassend das Einbringen von expandierten Polystyrolkügelchen oder -partikeln, umfassend ein athermanes Material, zusammen mit einem Feuerschutzmittel in einer Menge von 0,05 bis 2 Gewichtsteilen pro 100 Gewichtsteile des Styrolpolymers und eines anorganischen Bindemittels in einen geschlossenen Hohlraum.

2. Verfahren nach Anspruch 1, wobei das athermane Material Industrieruß ist.

3. Verfahren nach einem der Ansprüche 1 oder 2, wobei das anorganische Bindemittel ein Metallsilikat ist.

4. Verfahren nach einem der vorhergehenden Ansprüche, wobei ein feuerfester Verstärker mit dem anorganischen Bindemittel eingebracht wird.

5. Verfahren nach Anspruch 4, wobei der feuerfeste Verstärker expandierbares Graphit ist.

## Revendications

1. Procédé d'isolation de paroi creuse avec un isolant en vrac, comprenant l'introduction dans une cavité fermée de billes ou de particules de polystyrène expansé comprenant un matériau athermique avec un ignifuge dans une quantité comprise entre 0,05 et 2 parties en poids pour 100 parties en poids du polymère de styrène et d'un liant inorganique.

2. Procédé selon la revendication 1, dans lequel le matériau athermique est du noir de carbone.

3. Procédé selon la revendication 1 ou 2, dans lequel le liant inorganique est un silicate métallique.

4. Procédé selon l'une quelconque des revendications précédentes, dans lequel un amplificateur de résistance au feu est introduit dans le liant inorganique.

5. Procédé selon la revendication 4, dans lequel l'amplificateur de résistance au feu est du graphite expansible.
